Europäisches Patentamt

**European Patent Office**

Office européen des brevets

(19)

(11) Publication number: **0 106 517**

A2

(12) # EUROPEAN PATENT APPLICATION

(21) Application number: **83305290.5**

(22) Date of filing: **09.09.83**

(51) Int. Cl.³: **B 62 D 51/06**
**B 62 D 53/08**

(30) Priority: **11.09.82 GB 8225972**

(43) Date of publication of application:
**25.04.84 Bulletin 84/17**

(84) Designated Contracting States:
**AT BE CH DE FR GB IT LI LU NL SE**

(71) Applicant: **Sinclair, Iain**
**Iain Sinclair Design Willow House**
**Hildersham Cambridge(GB)**

(72) Inventor: **Sinclair, Iain**
**Iain Sinclair Design Willow House**
**Hildersham Cambridge(GB)**

(74) Representative: **Lawrence, Malcolm Graham et al,**
**Hambledon Mill Lane Hook End**
**Brentwood Essex CM15 0PP(GB)**

(54) **Transportation device.**

(57) A new form of transport for either utilitarian or recreational use. The conveyance is intended for towing a ski - or skate - wearing individual and comprises a carriage 11, wheels or other traction means 14 engaging the ground and handle means 16 which are pivoted to the carriage 11 and extend rearwardly and upwardly therefrom to be gripped by the individual from handle bar 31. Power is provided by a low capacity internal combustion engine 15 housed inside the casing 13 of the carriage 11, drive being coupled to the wheels 14 by a chain drive 25, toothed wheels 23 and 24 and axle 26.

*Fig.1.*

# TRANSPORTATION DEVICE

The invention relates to a transportation device or conveyance for towing a ski - or skate - wearing individual, usually at speed, upon a surface either as a utilitarian or recreational function.

Personal ground conveyance is usually achieved by means of a self-powered or towed vehicle upon which one or more individuals either stand or are seated. In aquatic transportation, individuals can be towed on skis behind a vehicle, usually a power boat, but this means of conveyance has never been deployed for ground transportation either in a utilitarian or recreational context.

According to the invention, there is provided a personal conveyance for transporting a ski - (eg. grass ski) or skate - wearing individual upon a surface as a utilitarian or recreational function, the device comprising a carriage, traction means supporting the carriage upon said surface, power means coupled to said traction means and handle means extending away from and above the carriage for gripping by the individual.

The conveyance will conveniently be a rapid conveyance device provided with power means so coupled to the traction means as to tow or otherwise transport the individual at speed (eg. a speed greater than 5mph). The speed of conveyance will vary according to requirements but the conveyance will, for example, conveniently be powered to provide speeds of 10mph or more, for example a speed of 12mph or more (eg. at least 15mph, such as 15 - 30mph). Speeds of up to 60mph can be achieved. The conveyance may, however, be powered to provide more moderate, although still comparatively rapid, speeds of 5 to 10mph (eg. 6 to 8mph).

The power means may be electrical and this may be preferable for utilitarian conveyances. However, the power means will in most cases preferably be in the form of a small capacity (less than 250cc) internal combustion engine, conveniently a petrol-driven engine of, for example, one or two reciprocatory cylinders. An engine of suitable size and type is an engine, normally air-cooled, of about 50 to 200cc (eg. 50 to 150cc, such as 125cc) such as conventionally used to power motor scooters and motor cycles.

The traction means may conveniently be one or more driven wheels but may be one or more caterpillar tracks.

In the case of a wheeled conveyance, one wheel conveniently disposed beneath the centre of mass of the conveyance may be sufficient for all purposes. One such wheel is preferred for recreational uses since this facilitates banking to accomodate fast sharp turning. Two spaced apart wheels may be used, however, and will generally be preferred for a utilitarian conveyance where, for example, stability in motion and ability to park may be important. Two such wheels will in general be disposed at the extremities of a common axle but may be mounted to separate shafts. Wheels whenever used in any conveyance according to the invention may be pneumatically tyred but may be rimmed with non - pneumatic, preferably soft, rubber tyres.

Tracked conveyances according to the invention will normally be provided with a pair of parallel tracks at the lateral extremities of the carriage, the tracks conveniently taking the form of endless belts of natural or synthetic rubber material. Drive sprockets, one or more for each belt, will conveniently have common drive and be driven at constantly matched speed since directional change can be accomplished by steering from the handle means. Provision for differential speed of drive of the two belts may, however, be provided.

In general, the power means will couple drive only to the traction means since no additional powered function will normally be present.

The carriage will normally include a housing containing the power means and a fuel or energy supply.

The handle means may carry control means for enabling the transported individual at least to stop and start driven movement of the conveyance. Such control means will conveniently include means to engage and disengage drive from the traction means, for example a clutch control when a clutch is provided in association with the power means, but may simply be a means to stop and start operation of the power means. The control means will preferably include means to control the speed of the conveyance, for example a throttle in the case of a conveyance powered by an internal combustion engine.

The handle means may be hinged to the carriage so as to allow pivotal movement of the handle in a vertical plane such as may be required to
accomodate individuals of varying height and variations in physical
stance during conveyance.  A fixed non - pivotal handle means may, however,
be preferred, particularly for recreational use, since urging of the handle
means downardly by a user will apply his weight and force to the traction
means so as to increase traction.

The handle means will, for example, take the form of an elongate stem
extending from the carriage and terminating in a handle bar or pair of
manually grippable bars.  The stem will preferably comprise two elongate
members, for example two tubular metal members or alternatively (and
preferably from a low weight point of view) the stem may be a plastics
moulding.

The conveyance will normally be portable and  as such will be made of
light-weight components.  To facilitate carrying by an individual, the
handle means will normally be collapsible so that a part thereof forms
a carrying handle and so that when carried by hand from such handle, the
conveyance clears the ground without the need for the individual to raise
or bend his arm.

Tractability in use of a conveyance having the light weight characteristics
desirable for portability can be achieved by provision of separate disposable weights.  For example, rocks or similar ballast material may be used
to provide the ground weight needed for tractability and a ballast receptacle may be provided as part of the conveyance.  Alternatively, the individual's weight can be employed to the same end by reversing drive or handle
means positioning, the individual then stradling the handle means, facing

-4-

away from the carriage.

The conveyance of the invention may be used to transport a ski - or skate - wearing individual on a variety of surfaces. Grass skates for transport on grass will perhaps be most common for recreational use. Road skates (eg. roller skates) may be worn for hard surface transport. Ice skates or snow or water skis may be used for transport on those surfaces.

Description of the Preferred Embodiments

The following is a desciption of preferred embodiments of the invention with reference to the accompanying drawings in which:-

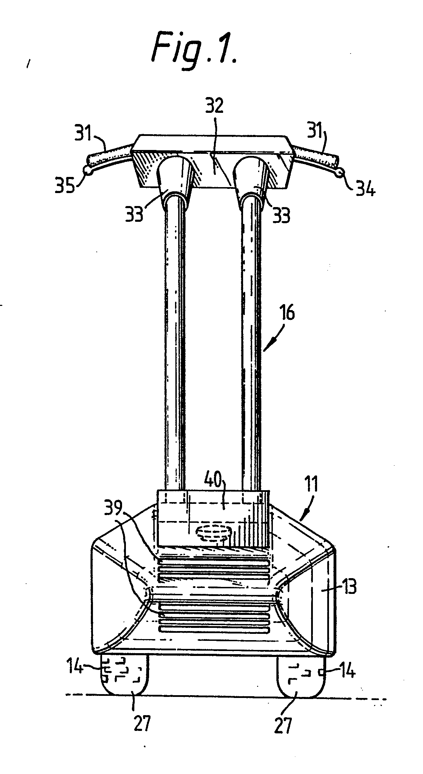

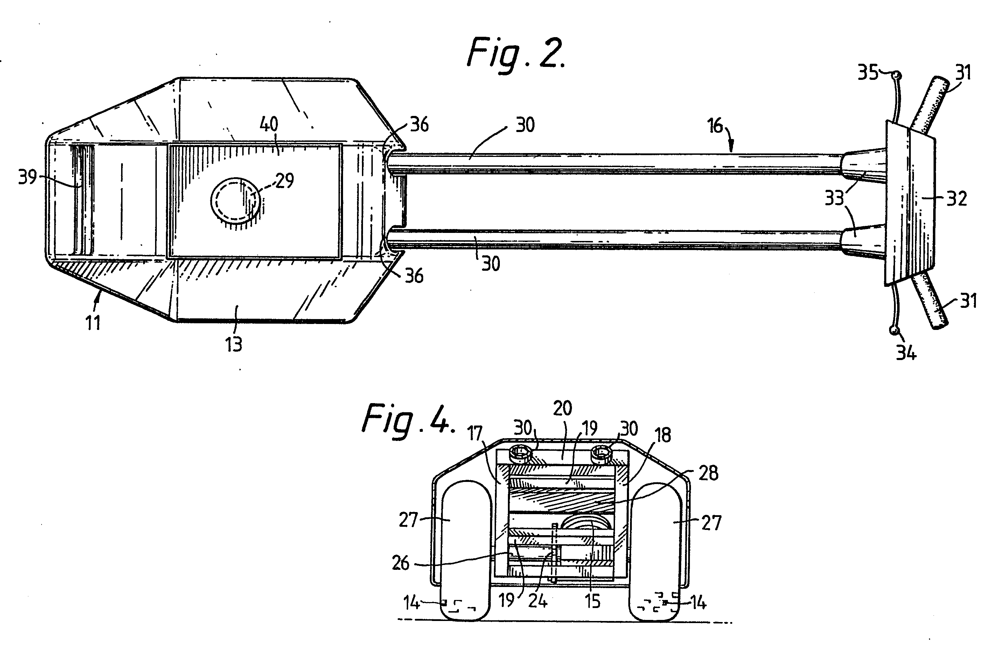

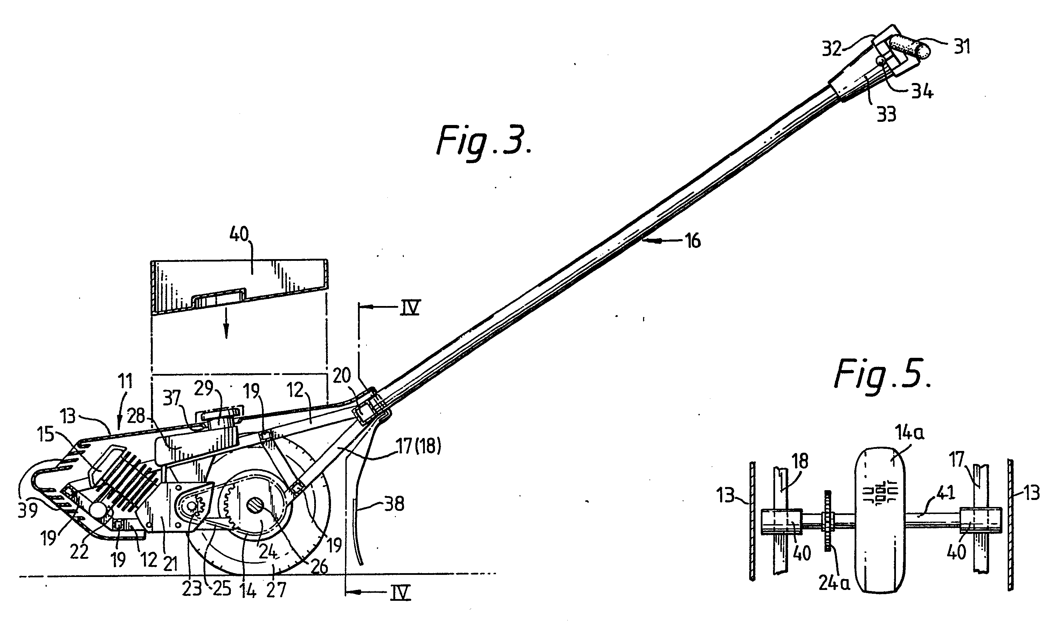

Figure 1 is a front view of a first embodiment of the invention; Figure 2 is a plan view of the conveyance shown in Figure 1; Figure 3 is a cross-section of the conveyance shown in Figures 1 and 2 taken along the line III - III of Figure 4; Figure 4 is a cross-section taken along the line IV - IV of Figure 3; and Figure 5 is a simplified drawing showing in plan part only of a single wheeled conveyance forming a second embodiment of the invention.

The conveyance shown in Figures 1 to 4 comprises a carriage shown generally at 11 and comprising a chassis 12 and a casing 13, two wheels 14, an air- -cooled internal combustion engine 15 and a handle assembly 16.

Chassis 12 comprises a pair of chassis frames 17 and 18 on opposed sides of the conveyance, each frame 17,18 being constructed of square cross- -sectioned tubular steel members. The chassis frames 17,18 are cross--braced by cross-members 19 and a mounting beam 20 provided for mounting the handle assembly 16 to the carriage 11.

Engine 15 is a petrol-driven, single cylinder 50cc internal combustion engine of a conventional and standard type commonly available for use in low power motor cycles.

Engine 15 is bolted to chassis frame 18 by its clutch/gear casing 21 and is also secured by bracing plate 22 similarly fixed to chassis frame 17. Drive sprocket wheel 23 of engine 15 connects drive from the gear output shaft (not shown) to driven sprocket wheel 24 by means of drive chain 25.

Sprocket wheel 24 is mounted rigidly to axle wheel shaft 26 so as to transmit drive to the shaft and to the wheels 14 which are mounted one each to the extremities of shaft 26.

Wheels 14 are tyred with pneumatic tyres 27 of a standard size between 10 and 12 inches in external diameter.

A fuel tank 28 is secured by means not shown to each of chassis frames 17 and 18. Tank 28 is provided with a fuel supply inlet in the form of a capped spout 29.

Handle assembly 16 comprises a stem portion comprised of a pair of tubular steel members 30 of circular cross-section. Each stem portion is secured rigidly by means not shown (eg. a weld) to beam 20. At their opposed ends, the two members 30 are connected by a handle bar 31.

A moulded plastics cover 32 is received over the handle bar 31, the members 30 being received within the sleeves 33 of the cover 32 so as to locate the cover in position. A brake hand lever control 34 and a clutch hand lever control 35 are provided for user stop-start control. Velocity control is provided by a rotatable handle bar portion proximate the brake hand lever control 34 whilst gear change is enabled by similar means at the opposed end of handle bar 31. Linkages concealed within cover 32 and the cavities of members 30 connect the controls just mentioned to a brake assembly, clutch mechanism, fuel throttle and gear selector shaft all contained within casing 13 in the assembled conveyance but not shown in the drawings in the interests of clarity.

Casing 13 is a plastics moulding having a frontal grille 39 for air intake and a pair of slots 36 at the casing rear. The casing is received over the engine 15 with fuel supply spout 29 received through aperture 37 formed in the casing and the members 30 of the handle assembly 16 received in slots 36. A combined stoneguard and mud flap 38 is secured by bolts (not shown) to the casing rear and accords with the configuration of the casing in plan across the lateral dimension of the casing rear. A removable ballast tray 42 of dished form is provided for taking up ballast (eg rocks or the like) for increasing traction, the tray 42 being made of moulded plastics material and locating over capped spout 29.

The conveyance shown in Figure 5 is similar to that shown in Figures 1 to 4 and like parts are designated by like reference numerals. However, only a single wheel 14a is provided, such wheel being rigidly mounted to a shaft 41 journalled in bearing blocks 40. The latter are secured to chassis side frames 17 and 18. Sprocket wheel 24a is fixed rigidly to shaft 41 and is chain driven from the gear output shaft through sprocket wheel 23.

The conveyances shown in the drawing will typically be used for an individual wearing grass skates on a grassy surface but may be used alternatively to tow or otherwise transport an individual wearing roller skates on a road or other hard surface. The conveyance of Figure 5 may be preferred for recreational use where the single wheel can facilitate banking to accomodate fast sharp turning. The two-wheeled conveyance of Figures 1 to 4 may be preferred for utilitarian use which may have as a pre-requisite the capability to park the conveyance.

Although the invention has been described with regard to its preferred embodiments, it should be understood that changes and modifications as would be obvious to one having ordinary skill in the art may be made without departing from the scope of the invention which is set forth in the claims which are appended hereto. For example the wheels 14 or 14a may be non-pneumatic or the engine may be of larger capacity (eg. 125cc). Alternatively, the handle assembly 16 may be provided with a rear-view mirror mounted one to either or to both of the handle bar lateral extremities. Water propulsion means such as paddles or a propellor may be provided as traction means instead of wheels, the conveyance in such case usually being further provided with aquaplane means (eg one or more skis) or other means of maintaining the conveyance on a water surface at least whilst in motion.

CLAIMS

1. A personal rapid transport conveyance for transporting a ski – or skate – wearing individual at speed upon a surface, said conveyance comprising a carriage, traction means supporting the carriage above said surface, power means coupled to transmit its output to the traction means for providing power to effect said rapid transport, and handle means extending away from and above the carriage for gripping by the individual, said handle means carrying control means operable by said individual at least to stop and start driven movement of the conveyance.

2. A personal rapid transport conveyance in accordance with Claim 1, wherein said traction means comprises at least one tyred, ground-engaging wheel.

3. A personal rapid transport conveyance in accordance with Claim 2, wherein said traction means comprises a pair of spaced apart, tyred wheels mounted one at each extremity of an axle.

4. A personal rapid transport conveyance in accordance with Claim 1, wherein said traction means comprises a pair of caterpillar tracks running one parallel to the other adjacent the lateral extremities of the carriage.

5. A personal rapid transport conveyance in accordance with any preceding claim wherein said power means comprises an internal combustion engine.

6. A personal rapid transport conveyance in accordance with any preceding claim wherein said power means is of such power as to transport the individual at a speed of more than 15mph.

7. A personal rapid transport conveyance in accordance with any preceding claim wherein said handle means comprises a stem portion hinged to said carriage so as to be pivotal in a vertical plane and comprised of a pair of moulded plastics elongate arms, and a handle bar portion comprising at least one moulded plastics handle bar secured to the extremity of the stem portion remote from the carriage.

8. A personal rapid transport conveyance in accordance with any preceding claim wherein a motor and energy supply therefor are housed within a casing, the motor is coupled to at least one ground - engaging wheel and capable of driving said wheel at a rate sufficient to convey said conveyance and individual at 15mph, a collapsible plastics moulded handle means is hinged to the casing and pivotal in a vertical plane and is provided with at least one handle bar for gripping by said individual, and the conveyance is portable by collapsing said handle means across the casing and carrying the conveyance from a handle provided by part of the handle means.

# Fig.1.

*Fig. 2.*

2/3

*Fig. 4.*

0106517

Fig. 3.

Fig. 5.